# EUROPÄISCHE PATENTSCHRIFT

(11) **EP 0 943 218 B1**
(45) Veröffentlichungstag und Bekanntmachung des Hinweises auf die Patenterteilung: **12.11.2003**
(21) Anmeldenummer: 97951106.0
(22) Anmeldetag: 02.12.1997
(51) Int. Cl.: H04Q 7/36

(54) **REPEATER FÜR FUNKSIGNALE**
REPEATER FOR RADIO SIGNALS
REPETEUR DE SIGNAUX RADIO

(30) Priorität: 02.12.1996 DE 19649855
(43) Veröffentlichungstag der Anmeldung: 22.09.1999
(73) Patentinhaber: T-Mobile Deutschland GmbH, 53227 Bonn (DE)
(72) Erfinder: HODER, Mathias, D-53229 Bonn (DE); KREUZ, Wolfgang, D-53123 Bonn (DE)
(74) Vertreter: Riebling, Peter, Dr.-Ing.
(86) Internationale Anmeldenummer: DE9702807
(87) Internationale Veröffentlichungsnummer: WO98025421

(56) Entgegenhaltungen:
- WO-A-95/24783
- WO-A-96/23370
- US-A- 5 548 803

## Beschreibung

Die Erfindung betrifft einen Repeater für Funksignale, vorzugsweise für den mobilen Einsatz in digitalen, zellularen Funknetzen.

Ein Repeater ist eine Art Relaisstation, welcher die von einer Basisstation eines Funknetzes ausgestrahlten Funksignale empfängt, verstärkt und wieder aussendet, so daß diese von Mobilstationen des Funknetzes empfangen werden können. Natürlich arbeitet ein Repeater auch in entgegengesetzter Richtung, d. h. die von einer Mobilstation abgestrahlten Funksignale werden durch den Repeater an eine Basisstation des Funknetzes weitergeleitet. In zellularen Funknetzes werden häufig Repeater zur Erweiterung eines Funkversorgungsbereiches, z. B. für die Versorgung von Tunneln, großen Gebäuden, Bergtälern oder ähnlichem eingesetzt. Der Einsatz von Repeatern ist insbesondere dann vorteilhaft, wenn aufgrund fehlender Infrastruktur die leitungsgemäße Anschaltung einer herkömmlichen Basisstation nicht oder nur mit unverhältnismäßig großem Aufwand möglich ist. Es gibt auch für den mobilen Einsatz vorgesehene Repeater, insbesondere für den Einsatz in Zügen.

Das Prinzip herkömmlicher Repeater ist die bidirektionale Verstärkung der Funksignale in Uplink- und Downlink-Richtung, wobei die Funksignale auf derselben Frequenz ausgesendet werden, auf der sie empfangen wurden. Das von der Basisstation entstammende Downlink-Signal wird mit einer Anbindungsantenne empfangen, im Downlink-Zweig des Repeaters verstärkt, gefiltert und über eine Versorgungsantenne in Richtung zur Mobilstation ausgesendet. Gleichzeitig wird das von der Mobilstation stammende Uplink-Signal mit der Versorgungsantenne empfangen, im Uplink-Zweig des Repeaters verstärkt, gefiltert und über die Anbindungsantenne zur Basisstation ausgesendet. Beim Einsatz in Fahrzeugen, wie z. B. in Schnellzügen, ist man darauf angewiesen, Breitbandrepeater einzusetzen, welche einen großen Bereich der im Funknetz verwendeten Frequenzen übertragen, um die Funktion in jeder durchfahrenen Zelle zu gewährleisten. Durch die Breitbandarbeitsweise des Repeaters treten dabei naturgemäß Verzerrungen des Signals auf (Phasen- und Amplitudenfehler, Intermodulation, Rauschen und ähnliches), die sich sehr nachteilig auf die Qualität der Funkverbindung auswirken.

Aus der WO-A-95/24783 ist ein Repeater für TDMA-Funksysteme bekannt, der im Downlink- und/oder Uplink-Zweig empfangene Funksignale demoduliert, und anschließend die so gewonnenen digitalen Datenströme wieder normgerecht moduliert, verstärkt und ausgesendet. Der Repeater beinhaltet eine Steuereinheit, die die Kommunikation zwischen der zugehörigen Basisstation, dem Repeater und der zu versorgenden Mobilstation steuert und eine entsprechende Frequenzzuweisung für die Mobilstation vornimmt.

Die US-A-5 548 803 offenbart einen Repeater, der ein im Downlink oder Uplink empfangenes Signal verstärkt und auf der selben oder einen anderen Frequenz wieder aussendet. Der Repeater beinhaltet dazu eine Steuereinheit, die die Kommunikation zwischen der zugehörigen Basisstation, dem Repeater und der zu versorgenden Mobilstation steuert und eine entsprechende Frequenzzuweisung für die Mobilstation vornimmt.

Aufgabe der Erfindung ist es, einen Repeater der eingangs genannten Art so weiterzubilden, daß die verarbeiteten Funksignale möglichst wenig Qualitätsverlust erleiden und ein störungsfreier, mobiler Einsatz des Repeaters gewährleistet ist.

Gelöst wird diese Aufgabe durch die Merkmale des Patentanspruches 1.

Gegenstand der Erfindung ist ein Repeater, der die empfangenen Signale demoduliert und anschließend neu moduliert, sowie eine Auswahl der zu repeatierenden Frequenzen trifft.

Der Vorteil der Erfindung liegt darin, daß das bei analogen Repeatern unvermeidliche, große Rauschen nicht auftritt und somit die Qualität der Funkverbindung erheblich verbessert wird. Weiterer, wesentlicher Vorteil ist, daß durch die erfindungsgemäße intelligente Steuereinheit, ein aufgrund eines Zellwechsels notwendiger Kanalwechsel erkannt wird, was die Handover-Prozedur erheblich erleichtert und den Repeater besonders geeignet für den Einsatz in Fahrzeugen macht.

Der erfindungsgemäße Repeater arbeitet nach folgendem Wirkprinzip:

Das empfangene Signal wird wie in einer Funkstation des betreffenden Funknetzes (Mobilstation oder Basisstation) gefiltert, verstärkt und demoduliert. Dabei wird vorzugsweise die Empfangsfeldstärke gemessen und als Steuersignal für die Steuerung der Ausgangsleistung des Sendeverstärkers verwendet. Bei Funknetzen, die mit TDMA (Time Division Multiple Access: Vielfachzugriff im Zeitmultiplex) arbeiten, erfolgt die Messung der Empfangsfeldstärke auf Zeitschlitzbasis. Der demodulierte, digitale Datenstrom wird einem Modulator zugeführt, verstärkt und wieder ausgesendet.

Darüber hinaus wird bei TDMA-Systemen eine systemengerechte Formung der Burst-Flanken (Power-Ramping) vorgenommen, um ein möglichst schmales Schaltspektrum zu erhalten. Die Burst-Amplitude wird durch die gemessene Empfangsfeldstärke gesteuert. Zur Stabilisierung der Amplitudensteuerung gegenüber Störungen durch Fading kann dabei eine Mittelung des Empfangssignals über mehrere Zeitrahmen durchgeführt werden.

Da der Repeater nur kanalselektiv arbeiten kann, ist im Falle des Einsatzes in Fahrzeugen eine Adaption an die jeweilige Zellsituation, d. h. die in der Zelle verwendeten Frequenzkanäle erforderlich. Dies wird durch das Überwachen der Downlink-Signalisierung, d. h. der Signalisierung von der Basisstation zur Mobilstation, erreicht.

Durch die intelligente Steuereinheit im Repeater läßt sich erreichen, daß der Repeater nur die Frequenzen der am stärksten zu empfangenden Basisstation (Funkzelle) des jeweiligen Funknetzes behandeln muß (empfangen, demodulieren und modulieren), zuzüglich der Frequenz des Organisationskanals der nächst stärkeren Nachbarzelle (welche durch die Logik des Repeaters ermittelt werden muß). Dazu muß die intelligente Steuereinheit des Repeaters den Signalisierungsverkehr überwachen und folgende Informationen daraus extrahieren:
1. die Liste der in der stärksten Zelle (Serving Cell) verwendeten Frequenzen,
2. die Liste der Organisationskanäle der Nachbarzelle,
3. je nach Funksystem auch Informationen über die Sequenz von Frequenzsprungverfahren (Frequency Hopping) sowie deren konkreten Ablauf.

Wird der Repeater durch eine Zelle bewegt, so muß dessen Steuereinheit selbst die Entscheidung über den bevorstehenden Wechsel in eine neue Funkzelle treffen können und auch die am besten geeignete Zelle auswählen. Ist ein Zellwechsel (Handover) erforderlich, senkt der Repeater den Pegel der stärksten Zelle (Serving Cell) auf der Versorgungsseite ab und erhöht den Pegel der Zielzelle für den Wechsel, so daß die Steuerung des Funksystems automatisch den Wechsel der Verbindungen der Mobilstationen in die neue Zelle veranlaßt. Sobald die erste Mobilstation, die über den Repeater versorgt wird, in die neue Zelle gewechselt hat, muß der Repeater auch die Frequenzen der neuen, stärkeren bedienen können. Die Information, ob eine Mobilstation der repeatierten Zelle über den Repeater versorgt wird oder über den direkten Funkkontakt zur Basisstation, läßt sich über die zeitliche Beziehung beider Richtungen des Funkverkehrs und über die Leistung des Signals der Mobilstation, das der Repeater empfängt, ermitteln.

Je Repeater-Zweig werden Funktionseinheiten wie Kanalfilter, Demodulator, Modulator und Sendeverstärker gegebenenfalls entsprechend der Anzahl der Hochfrequenzkanäle mehrfach parallel geschaltet.

Der Repeater enthält ein Frequenznormal, welches zweckmäßigerweise über den Synchronisationskanal des von der Basisstation kommenden Downlink-Kanals synchronisiert wird. Dieses Frequenznormal dient als zentraler Taktgeber zur Generierung der Trägerfrequenz, der Modulation, gegebenenfalls der Burstformung etc.

Über eine Datenverbindung in Form eines Funkkanals zwischen Repeater und Basisstation, welcher Funkkanal Bestandteil der vom Repeater verwendeten Kanäle ist, läßt sich eine Fernsteuerung und Fernüberwachung des Repeaters realisieren. Die Realisierung dieser Datenverbindung übernimmt eine Baugruppe, die die Funktionalität einer datenfähigen Mobilstation hat und welche Teil der intelligenten Steuereinheit ist. Diese kann entweder direkt mit der Anbindungsantenne gekoppelt oder über einen Multiplexer/Demultiplexer an die digitalen Datenströme der beiden Repeater-Zweige angekoppelt sein und auf diese zugreifen.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: eine schematische Darstellung der Funktionseinheiten eines klassischen Repeaters nach dem Stand der Technik;
- Figur 2:: eine schematische Darstellung der Funktionseinheiten des erfindungsgemäßen Repeaters.

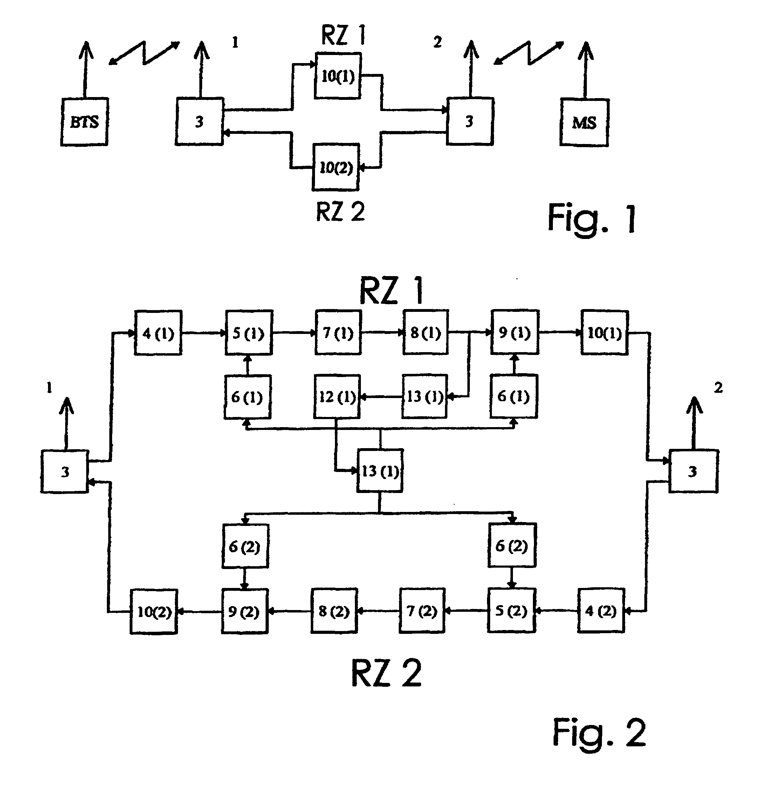

Ein klassischer Repeater gemäß Figur 1 führt im wesentlichen eine bidirektionale Verstärkung der von einer Basisstation BTS bzw. Mobilstation MS kommenden Funksignal in Uplink- und Downlink-Richtung durch, wobei die von der Richtung Basisstation BTS kommenden Funksignale mittels einer Anbindungsantenne 1 und einem nachgeschalteten Duplexfilter 3 empfangen werden, im Downlink-Repeaterzweig RZ 1 verstärkt, möglicherweise selektiert und über einen weiteren Duplexfilter 3 und eine Versorgungsantenne 2 in Richtung zur Mobilstation MS wieder ausgesendet werden. Der Uplink-Repeaterzweig RZ 2 arbeitet in gleicher Weise und leitet die von der Mobilstation MS kommenden Signale an die Basisstation BTS weiter.

Der erfindungsgemäße Repeater gemäß Figur 2 arbeitet dagegen auf andere Weise. Nachfolgend wird lediglich der Lauf eines Downlink-Signals von der Basisstation BTS zur Mobilstation MS beschrieben, welches einen ersten Repeaterzweig RZ 1 durchläuft. Die Verarbeitung der Uplink-Signale folgt in gleicher Weise.

Das von der Mobilstation BTS kommende Funksignal wird über einen Duplex-Filter 3 einem Vorverstärker 4 zugeführt und über einen Mischer 5 in sein Basisfrequenzband bzw. eine Zwischenfrequenz herabgesetzt. Die Mischfrequenz wird durch einen Lokaloszillator 6 erzeugt. Das Basisbandsignal wird über einen Kanalfilter 7 auf einen Demodulator 8 geleitet. Nach dem Demodulator liegt der demodulierte, digitale Datenstrom vor. Dieser wird nun durch einen Modulator 9 entsprechend aufbereitet und auf eine Trägerfrequenz moduliert, durch einen Sendeverstärker 10 verstärkt und über einen weiteren Duplexfilter 3 von der Versorgungsantenne 2 zur Mobilstation hin abgestrahlt.

Der Repeater verfügt über eine intelligente Steuereinheit 12, welche den Signalisierungsverkehr zwischen Basisstationen und Mobilstationen, sowie die jeweiligen Empfangsfeldstärken überwacht und entsprechend auswertet. Somit ist es möglich, die Verbindung der Mobilstation mit einer Basisstation der jeweils günstigsten Basisstation zuzuordnen und einen Zellenwechsel (Handover) zu unterstützen. Diese Fähigkeit prädestiniert den erfindungsgemäßen Repeater für den möbilen Einsatz.

Die Steuereinheit 12 verfügt zweckmäßigerweise über eine Fernsteuer- und Fernüberwachungseinheit, die durch einen vom Repeater verwendeten Kanal angesteuert wird. Der nach dem Demodulator 8 anliegende, digitale Datenstrom wird abgezweigt, wobei die für die Steuereinheit relevanten Signale durch einen Mulitplexer/Demultiplexer 13 "herausgefiltert" werden.

Die Steuereinheit 12 liefert ein aus dem Datenstrom generiertes Synchronisationssignal an das Frequenznormal 11, welches als zentraler Taktgeber für alle Lokaloszilatoren 6 dient. Das Synchronisationssignal wird aus dem Synchronisationskanal des demodulierten Signals erzeugt.

Die Steuereinheit 12 ist über eine Steuerleitung zumindest mit dem Sendeverstärker 10 des Downlink-Zweiges verbunden und steuert hierüber die Ausgangsleistung des Sendeverstärkers 10.

### Zeichnungslegende

- 1: Anbindungsantenne
- 2: Versorgungsantenne
- 3: Duplex-Filter
- 4: Vorverstärker
- 5: Mischer
- 6: Lokaloszillator
- 7: Kanalfilter
- 8: Demodulator
- 9: Modulator
- 10: Sendeverstärker
- 11: Frequenznormal
- 12: Intelligente Steuereinheit
- 13: Multiplexer/Demultiplexer
- BTS: Basistation
- MS: Mobilstation

## Patentansprüche

1. Repeater für Funksignale, vorzugsweise für den mobilen Einsatz in digitalen zellularen Funknetzen, bei dem die im Downlink- (RZ1) und/oder Uplink-Zweig (RZ2) des Repeaters empfangenen Funksignale demoduliert werden, und anschließend die so gewonnenen digitalen Datenströme wieder normgerecht moduliert, verstärkt und ausgesendet werden, **dadurch gekennzeichnet, daß** eine intelligente Steuereinheit (12) vorgesehen ist, die bei Bewegung des Repeaters durch eine Zelle selbst die Entscheidung über den bevorstehenden Wechsel in eine neue Funkzelle trifft und durch Überwachung des Signalisierungsverkehrs im Funknetz und selbständige Abstimmung der vom Repeater übertragenen Frequenzkanäle auf die von der Nachbarfunkzelle verwendeten Kanäle einen Wechsel der Funkverbindung (Handover) in die neue Funkzelle unterstützt.

2. Repeater nach Anspruch 1, **dadurch gekennzeichnet, daß** die in einem Repeaterzweig (RZ1 bzw. RZ2) empfangenen Funksignale demoduliert werden, und anschließend die gewonnenen digitalen Datenströme wieder normgerecht moduliert, verstärkt und ausgesendet werden, während der andere Repeaterzweig (RZ2 bzw. RZ1) analog arbeitet.

3. Repeater nach einem der Ansprüche 1 oder 2, **dadurch gekennzeichnet, daß** die intelligente Steuereinheit (12) den Wechsel der Funkverbindung in eine neue Zelle durch gezielte Beeinflussung des Signalpegels der abgestrahlten Funksignale forciert.

4. Repeater nach einem der Ansprüche 1 bis 3, **dadurch gekennzeichnet, daß** eine Leistungssteuerung des ausgesendeten Signals und die Ermittlung der Parameter für diese Leistungssteuerung durch Überwachung des Signalisierungsverkehrs im Funknetz erfolgt.

5. Repeater nach einem der Ansprüche 1 bis 4, **dadurch gekennzeichnet, daß** die Empfangsfeldstärke der von der Basisstation (BTS) empfangenen Funksignale gemessen und als Steuersignal für die Leistungsregelung des Sendeverstärkers (10) verwendet wird.

6. Repeater nach einem der Ansprüche 1 bis 5, **dadurch gekennzeichnet, daß** ein Frequenznormal (11) vorgesehen ist, das die bei der Modulation des digitalen Datenstroms benötigte Normalfrequenz durch Synchronisation auf das von der Basisstation des Funknetzes abgestrahlte Synchronisationssignal gewinnt.

7. Repeater nach einem der Ansprüche 1 bis 6, **dadurch gekennzeichnet, daß** die intelligente Steuereinheit (12) eine Fernüberwachungs- und/oder Fernsteuereinheit umfaßt, die unter Ausnutzung der Sende- und Empfangsbaugruppen (3-10) des Repeaters über die digitalen Datenströme unter Zwischenschaltung von Multiplexern/Demultiplexern (13) mit der Basisstation des Funknetzes kommuniziert.

## Claims

1. Repeater for radio signals, preferably for mobile use in digital cellular radio communications networks, in which the radio signals received in the downlink (RZ1) and/or uplink branch (RZ2) of the repeater are demodulated and then the digital data streams obtained in this way are again modulated, amplified and sent out in line with standard, **characterized in that** an intelligent control unit (12) is provided which when the repeater moves through a cell itself takes the decision about the approaching changeover into a new radio communications cell and by monitoring the signal traffic in the radio communications network and independent matching of the frequency channels transmitted by the repeater to the channels used by the neighbouring radio communications cell supports a switch of radio connection (handover) into the new radio communications cell.

2. Repeater according to Claim 1, **characterised in that** the radio signals received in a repeater branch (RZ1 or RZ2) are demodulated and then the digital data streams obtained are again modulated, amplified and sent out in line with standard while the other repeater branch (RZ2 or RZ1) operates analogously.

3. Repeater according to one of Claims 1 or 2, **characterised in that** the intelligent control unit (12) forces the handover of the radio connection into a new cell by selective control of the signal level of the radio signals beamed out.

4. Repeater according to any of Claims 1 to 3, **characterised in that** control of the power of the signal sent out and determination of the parameters for this power control ensue by monitoring the signal traffic in the radio communications network.

5. Repeater according to any of Claims 1 to 4, **characterised in that** the receive field strength of the radio signals received from the base station (BTS) is measured and used as a control signal for regulating the power of the transmitter amplifier (10).

6. Repeater according to any of Claims 1 to 5, **characterised in that** a frequency standard (11) is provided which obtains the standard frequency needed in the modulation of the digital data stream by synchronising with the synchronisation signal beamed out by the base station of the radio communications network.

7. Repeater according to any of Claims 1 to 6, **characterised in that** the intelligent control unit (12) comprises a remote monitoring and/or remote control unit which by utilising the transmit and receive modules (3-10) of the repeater communicates with the base station of the radio communications network via the digital data streams by interposing multiplexers/demultiplexers (13).

## Revendications

1. Répéteur pour signaux radio, de préférence pour l'utilisation mobile dans des réseaux cellulaires numériques de radiotéléphonie, avec lequel les signaux radio reçus dans la branche descendante (RZ1) et/ou dans la branche montante (RZ2) du répéteur sont démodulés et les flux de données numériques ainsi obtenus sont ensuite remodulés conformément aux normes, amplifiés et émis, **caractérisé en ce qu'**il est prévu une unité de commande intelligente (12) qui, lors du déplacement du répéteur à travers une cellule, prend elle-même la décision du passage imminent à une nouvelle cellule radio et qui, en surveillant le trafic de signalisation dans le réseau et en accordant de manière autonome les canaux de fréquence transmis par le répéteur aux canaux utilisés par la cellule voisine, supporte un passage de la liaison radio (transfert) dans la nouvelle cellule.

2. Répéteur selon la revendication 1, **caractérisé en ce que** les signaux radio reçus dans une branche de répéteur (RZ1 ou RZ2) sont démodulés et les flux de données numériques ainsi obtenus sont ensuite remodulés conformément aux normes, amplifiés et émis, pendant que l'autre branche de répéteur (RZ2 ou RZ1) fonctionne d'une manière analogue.

3. Répéteur selon la revendication 1 ou 2, **caractérisé en ce que** l'unité de commande intelligente (12) force le passage de la liaison radio dans une nouvelle cellule en influençant de manière ciblée le niveau des signaux radio émis.

4. Répéteur selon l'une des revendications 1 à 3, **caractérisé en ce qu'**une commande de puissance du signal émis et la détermination des paramètres pour cette commande ont lieu grâce à la surveillance du trafic de signalisation dans le réseau.

5. Répéteur selon l'une des revendications 1 à 4, **caractérisé en ce que** l'intensité de champ de réception des signaux radio reçus par la station de base (BTS) est mesurée et est utilisée comme signal de commande pour le réglage de puissance de l'amplificateur d'émission (10).

6. Répéteur selon l'une des revendications 1 à 5, **caractérisé en ce qu'**il est prévu un étalon de fréquence (11) qui produit la fréquence étalon nécessaire lors de la modulation du flux de données numériques, grâce à une synchronisation par rapport au signal de synchronisation émis par la station de base du réseau de radiotéléphonie.

7. Répéteur selon l'une des revendications 1 à 6, **caractérisé en ce que** l'unité de commande intelligente (12) comprend une unité de télésurveillance et/ou de télécommande qui, en exploitant les groupes d'émission et de réception (3-10) du répéteur, communique avec la station de base du réseau de radiotéléphonie par l'intermédiaire des flux de données numériques, avec le montage intermédiaire de multiplexeurs/démultiplexeurs (13).
